# FASCICULE DE BREVET EUROPEEN

(11) **EP 2 090 793 B1**
(45) Date de publication et mention de la délivrance du brevet: **22.06.2011**
(21) Numéro de dépôt: 09290093.5
(22) Date de dépôt: 09.02.2009
(51) Int. Cl.: F16C 19/18, F16C 19/52, G01L 5/16, G01M 13/04

(54) **Palier à roulement à rigidité différentielle des zones instrumentées en déformation**
Wälzlager mit unterschiedlicher Steifigkeit in den von der Verformung beeinflussten Zonen
Roller bearing with differential rigidity of zones instrumented by deformation

(30) Priorité: 14.02.2008 FR 0800825
(43) Date de publication de la demande: 19.08.2009
(73) Titulaire: SNR Roulements, 74000 Annecy (FR)
(72) Inventeur: Guillaume, Sébastien, 74290 Menthon-Saint-Bernard (FR); Pourreuix, Cyril, 74000 Annecy (FR)
(74) Mandataire: Sayettat, Julien Christian

(56) Documents cités:
- EP-A- 1 176 409
- EP-A- 1 672 371
- EP-A- 1 843 055
- US-A1- 2003 185 476

## Description

L'invention concerne un palier à roulement comprenant un organe fixe, un organe tournant et au moins une rangée de corps roulants disposée entre lesdits organes pour permettre leur rotation relative.

En particulier, l'invention s'applique à des roulements de roue de véhicule automobile, la bague fixe dudit roulement étant destinée à être solidaire du châssis du véhicule, la roue étant destinée à être montée en rotation par l'intermédiaire de la bague tournante dudit roulement, et deux rangées de billes étant prévues entre lesdites bagues.

Dans de nombreuses applications, notamment en relation avec les systèmes d'assistance et de sécurité tels que l'ABS ou l'ESP, il est nécessaire de déterminer les efforts qui s'appliquent lors des déplacements du véhicule à l'interface entre la roue et la chaussée sur laquelle ladite roue tourne.

En particulier, la détermination de ces efforts peut être réalisée par une mesure des déformations de la bague fixe qui sont induites par le passage des corps roulants. En effet, l'amplitude de ces déformations est représentative des efforts transmis par le roulement. Pour ce faire, notamment le document EP-1 176 409, prévoit d'instrumenter des zones de la bague fixe en associant sur elles au moins une jauge de mesure desdites déformations.

Toutefois, la mesure des déformations ainsi réalisée demeurent difficilement exploitable, notamment du fait de leur faible variation d'amplitude relativement aux déformations globales de la bague fixe qui sont induites par d'autres facteurs que le passage des corps roulants. En particulier, la température induit une déformation moyenne de la bague extérieure, les déformations induites par le passage des corps roulants variant faiblement autour de cette valeur moyenne.

On connait du document EP-1843055 un palier selon le préambule de la revendication 1.

L'invention vise à perfectionner l'art antérieur en proposant notamment un palier à roulement dont l'organe fixe est instrumenté en déformation, ledit organe étant agencé pour permettre une augmentation du rapport entre les variations d'amplitude des déformations induites par le passage des corps roulants et l'amplitude moyenne des déformations de l'organe fixe.

A cet effet, l'invention propose un palier à roulement selon la revendication 1.

D'autres objets et avantages de l'invention apparaîtront dans la description qui suit, faite en référence aux figures annexées, dans lesquelles :
- la figure 1 est une vue en perspective d'un palier à roulement selon un premier mode de réalisation de l'invention ;
- la figure 2 est une vue en coupe longitudinale du palier à roulement selon la figure 1 ;
- les figures 3 et 4 sont des vues en perspective d'un palier à roulement selon un deuxième mode de réalisation de l'invention ;
- la figure 5 est une vue en coupe longitudinale du palier à roulement selon les figures 3 et 4.

En relation avec ces figures, on décrit ci-dessous un palier à roulement de roue de véhicule automobile comprenant un organe extérieur fixe 1 destiné à être associé au châssis du véhicule, un organe intérieur tournant (non représenté) sur lequel est destinée à être montée la roue et deux rangées de billes (non représentées) qui sont disposées respectivement dans un chemin de roulement 2. Toutefois, l'invention peut concerner d'autres types de palier à roulement, ainsi que des paliers pour d'autres applications automobiles ou autres.

Lors du déplacement du véhicule, la roue tourne sur la chaussée en induisant des efforts à leur interface, lesdits efforts étant transmis au châssis par l'intermédiaire du palier. Par conséquent, la détermination de ces efforts, notamment en vu d'alimenter les systèmes d'assistance et de sécurité du véhicule, peut être réalisée en estimant temporellement les composants du torseur d'efforts qui s'applique sur le palier.

En particulier, lors du passage des billes, le torseur d'efforts induit des déformations de l'organe fixe 1 dont la mesure peut être exploitée afin de calculer l'estimation des composants dudit torseur.

Pour ce faire, l'organe fixe 1 comprend une surface circonférentielle 3 qui est déformable élastiquement par le passage des corps roulants lors de la rotation de l'organe tournant dans l'organe fixe 1. Dans les modes de réalisation représentés, la surface circonférentielle 3 est formée sur la périphérie extérieure de l'organe fixe, plus précisément sur la partie cylindrique de révolution de ladite surface extérieure. En effet, le passage des corps roulants induit un effort radial sur cette surface 3, qui la déforme élastiquement de façon périodique autour d'une valeur moyenne.

La surface déformable 3 présente au moins une zone instrumentée 4 sur laquelle au moins une jauge (non représentée) de mesure des déformations est associée. Selon une réalisation, la jauge peut comprendre un ou des motifs à base d'éléments résistifs, notamment piézorésistifs ou magnétostrictifs, qui sont disposés sur un substrat de support, ledit substrat étant associé par exemple par collage sur ladite zone. Pour faciliter cette association, la zone instrumentée 4 peut comprendre un méplat sur lequel le substrat est associé.

En particulier, une jauge comprenant une barrette de motifs espacés sur un substrat peut être utilisée pour délivrer un signal temporel pseudo sinusoïdal autour d'une valeur moyenne, ledit signal étant fonction des déformations de la zone instrumentée 4. Ainsi, le signal peut être conditionné pour exploiter la composante pseudo sinusoïdale qui est représentative de l'amplitude des déformations induites par le passage des corps roulants. Toutefois, l'invention n'est pas limitée à une réalisation particulière des jauges pour mesurer les déformations de la surface extérieure 3 de l'organe fixe 1.

La zone instrumentée 4 est entourée circonférentiellement de part et d'autre par respectivement une zone non instrumentée 5. Dans les modes de réalisations représentés, quatre zones instrumentées 4 sont équiréparties sur la surface extérieure 3 de l'organe fixe 1, lesdites zones instrumentées étant séparées les unes des autres par quatre zones non instrumentées 5. En particulier, les bords des zones 4, 5 s'étendent axialement et la dimension angulaire des zones non instrumentées 5 est supérieure à la dimension angulaire des zones instrumentées 4, par exemple d'un facteur de l'ordre de 2.

En relation avec les figures, on décrit ci-dessous deux modes de réalisation d'un palier à roulement dans lesquels la surface extérieure 3 de l'organe fixe 1 présente une bride 6 comprenant quatre orifices 7 formant moyens de fixation par boulonnage du palier à une structure fixe. En particulier, la bride 6 s'étend essentiellement radialement depuis le voisinage d'un bord de la surface extérieure 3, les zones instrumentées 4 s'étendant axialement depuis la bride 6 jusqu'au bord opposé de ladite surface extérieure.

Afin de permettre une augmentation du rapport entre les variations d'amplitude des déformations induites par le passage des corps roulants et l'amplitude moyenne des déformations de l'organe fixe 1, l'invention prévoit que la rigidité des zones instrumentées 4 soit strictement supérieure à la rigidité des zones non instrumentées 5. En effet, les déformations moyennes, notamment d'ovalisation et de gonflement de la surface extérieure 3 de l'organe fixe 1, sont alors plus particulièrement localisées sur les zones non instrumentées 5 de sorte à les limiter sur les zones instrumentées 4.

En outre, toujours pour limiter l'influence des variations de déformation moyenne dans les mesures, les jauges peuvent être associées dans la partie la plus rigide des zones instrumentées 4, par exemple à proximité de la bride 6 dans les modes de réalisation représentés.

Par ailleurs, pour augmenter l'amplitude des mesures des déformations induites par le passage des corps roulants, les jauges de mesure peuvent être disposées au plus près des chemins de roulement 2. Dans les modes de réalisation représentés, une zone instrumentée 4 peut comprendre une jauge à proximité du plan radial contenant un chemin de roulement 2, lesdites jauges pouvant être portées par un même substrat qui s'étend alors axialement d'un chemin de roulement 2 à l'autre.

En outre, selon les réalisations représentées, le palier à roulement comprend des moyens structurels de rigidification des zones instrumentées 4 et/ou des moyens structurels d'assouplissement des zones non instrumentées 5. En particulier, ces moyens de rigidification - respectivement d'assouplissement - peuvent comprendre un ajout - respectivement un retrait - de matière sur l'organe fixe 1 et notamment sur la surface déformable élastiquement 3. Selon une réalisation non représentée, la rigidification et/ou l'assouplissement peut être obtenu en modifiant la rigidité propre du matériau formant respectivement les zones instrumentées 4 et non instrumentées 5.

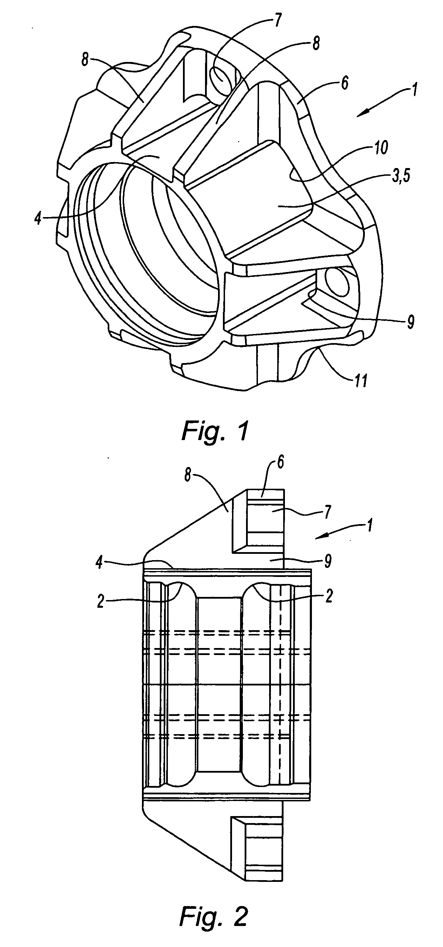

Sur les figures 1 et 2, les moyens structurels de rigidification comprennent deux parois axiales 8 qui s'étendent depuis la bride 6 en étant solidaire de la surface extérieure 3. Plus précisément, la bride 6 s'étend radialement et les parois 8 sont venues de matière sur une surface latérale de ladite bride en étant espacées circonférentiellement. Par ailleurs, les parois axiales 8 représentées s'étendent sur toute la dimension axiale de la surface extérieure 3, la dimension radiale des parois 8 décroissant depuis la bride 6 jusqu'au bord opposé de la surface extérieure 3. Cette réalisation permet d'obtenir une structure en U de rigidification d'une zone instrumentée 4.

En outre, chaque paroi 8 sépare la zone instrumentée 4 d'une zone non instrumentée 5 de sorte à délimiter angulairement ladite zone instrumentée entre lesdites parois axiales. Par ailleurs, la dimension angulaire de la zone instrumentée 4 est strictement inférieure à la dimension angulaire des zones non instrumentées 5 de sorte que les parois 8 rigidifient essentiellement ladite zone instrumentée.

Sur les figures 1 et 2, un orifice de fixation 7 est disposé entre les deux parois axiales 8 dans la portion angulaire délimitant la zone instrumentée 5, de sorte que les parois 8 rigidifient également la portion de la bride 6 sur laquelle les efforts de fixation sont principalement concentrés.

Par ailleurs, une lumière 9 est formée dans la jonction entre la zone instrumentée 4 et la bride 6. En effet, la jauge peut alors être associée au moins partiellement dans ladite lumière de sorte à être disposées au plus près du chemin de roulement 2 qui est formé sous la bride 6.

En complément de l'augmentation de la rigidité de la zone instrumentée 4, le palier à roulement peut comprendre des moyens d'assouplissement des zones non instrumentées 5 de sorte à augmenter la rigidité différentielle entre ces zones 4, 5.

Dans les deux modes de réalisations représentés les moyens d'assouplissement d'une zone non instrumentée 5 comprennent une lumière 10 dans la jonction entre ladite zone et la bride 6. Ainsi, en désolidarisant, au moins localement sur un tronçon angulaire, la bride 6 de la zone non instrumentée 5, on obtient un assouplissement de ladite zone non instrumentée.

En outre, sur les figures 1 et 2, la partie de la bride 6 formée en regard de la zone non instrumentée 5 est également assouplie. En effet, cette partie présente une hauteur globale qui est inférieure à celle de la partie de ladite bride formée en regard de la zone instrumentée 4, de sorte à augmenter la rigidité différentielle entre ces zones 4, 5. En particulier, la partie de la bride 6 formée en regard de la zone non instrumentée 5 présente une échancrure 11 entre les deux parois axiales 8.

Par ailleurs, toujours pour assouplir la zone non instrumentée 5, l'épaisseur de la partie de la bride 6 formée en regard de cette zone peut être réduite. En variante non représentée, la lumière 9 peut s'étendre sur toute la hauteur de la bride 6 de sorte à former une discontinuité dans ladite bride.

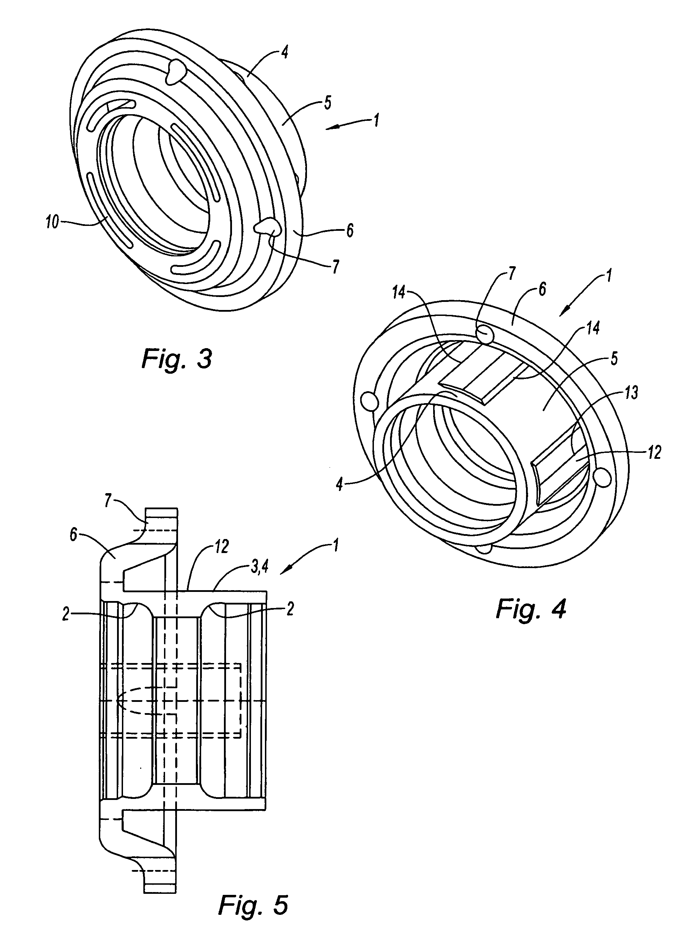

Sur les figures 3 à 5, les moyens structurels de rigidification comprennent un bossage 12 qui est réalisé sur la zone instrumentée 4, la jauge de mesure étant associée sur ledit bossage. Selon l'invention, cette réalisation de rigidification directe de la zone instrumentée 4 peut être combinée à la rigidification indirecte de ladite zone en prévoyant les parois axiales 8 de rigidification précédemment décrites.

Les bossages 12 présentent un méplat d'association des jauges, ledit méplat étant réalisé de sorte que le diamètre de sa partie centrale 13 soit sensiblement égal à celui de la surface extérieure 3 de l'organe fixe 1, les bords latéraux 14 dudit méplat étant saillants radialement par rapport à ladite surface. Ainsi, en disposant la jauge sur cette partie centrale 13, on combine la disposition de la jauge au plus près des chemins de roulement 2 avec la rigidification induite par l'ajout de matière de part et d'autre de ladite jauge.

## Revendications

1. Palier à roulement comprenant un organe fixe (1), un organe tournant et au moins une rangée de corps roulants disposée entre lesdits organes pour permettre leur rotation relative, ledit organe fixe comprenant une surface circonférentielle (3) formée sur la surface extérieure de l'organe fixe (1), ladite surface étant déformable élastiquement par les efforts induits par le passage des corps roulants lors de la rotation de l'organe tournant, ladite surface présentant une bride (6) comprenant des moyens de fixation (7) du palier à une structure fixe et au moins une zone instrumentée (4) sur laquelle au moins une jauge de mesure desdites déformations est associée, ladite zone instrumentée étant entourée circonférentiellement de part et d'autre par respectivement une zone non instrumentée (5), la rigidité de la zone instrumentée (4) étant strictement supérieure à la rigidité des zones non instrumentées (5), ledit palier étant **caractérisé en ce qu'**il comprend des moyens structurels de rigidification de la zone instrumentée (4) et des moyens structurels d'assouplissement des zones non instrumentées (5), les moyens structurels de rigidification comprenant deux parois axiales (8) qui s'étendent depuis la bride (6) en étant solidaire de la surface extérieure (3), chaque paroi (8) séparant la zone instrumentée (4) d'une zone non instrumentée (5) de sorte à délimiter angulairement ladite zone instrumentée entre lesdites parois axiales, la dimension angulaire de la zone instrumentée (4) étant strictement inférieure à la dimension angulaire des zones non instrumentées (5).

2. Palier à roulement selon la revendication 1, **caractérisé en ce que** la zone instrumentée (4) comprend un méplat sur lequel la jauge est associée.

3. Palier à roulement selon la revendication 1 ou 2, **caractérisé en ce que** la zone instrumentée (4) s'étend depuis la bride (6) jusqu'à un bord opposé de la surface extérieure (3).

4. Palier à roulement selon la revendication 3, **caractérisé en ce que** la jauge est associée sur la zone instrumentée (4) à proximité de la bride (6).

5. Palier à roulement selon l'une quelconque des revendications 1 à 4, **caractérisé en ce qu'**un moyen de fixation (7) est formé entre les deux parois axiales (8) dans la portion angulaire délimitant la zone instrumentée (4).

6. Palier à roulement selon l'une quelconque des revendications 1 à 5, **caractérisé en ce que** les parois axiales (8) s'étendent sur toute la dimension axiale de la surface extérieure (3).

7. Palier à roulement selon l'une quelconque des revendications 1 à 6, **caractérisé en ce qu'**une lumière (9) est formée dans la jonction entre la zone instrumentée (4) et la bride (6), la jauge étant associée au moins partiellement dans ladite lumière.

8. Palier à roulement selon l'une quelconque des revendications 1 à 7, **caractérisé en ce que** les moyens d'assouplissement d'une zone non instrumentée (5) comprennent une lumière (10) dans la jonction entre ladite zone et la bride (6) de sorte à désolidariser, au moins localement sur un tronçon angulaire, la bride (6) de la zone non instrumentée (5).

9. Palier à roulement selon la revendication 8, **caractérisé en ce que** la lumière (10) s'étend sur toute la hauteur de la bride (6) de sorte à former une discontinuité dans ladite bride.

10. Palier à roulement selon l'une quelconque des revendications 1 à 9, **caractérisé en ce que** les moyens structurels de rigidification comprennent un bossage (12) réalisé sur la zone instrumentée (4), la jauge de mesure étant associée sur ledit bossage.

11. Palier à roulement selon la revendication 10, **caractérisé en ce que** le bossage (12) présente un méplat d'association des jauges, ledit méplat étant réalisé de sorte que le diamètre de sa partie centrale (13) soit sensiblement égal à celui de la surface extérieure (3) de l'organe fixe (1), les bords latéraux (14) dudit méplat étant saillants radialement par rapport à ladite surface.

## Claims

1. A roller bearing including a stationary member (1), a rotary member and at least one row of rolling bodies arranged between said members so as to enable their relative rotation, said stationary member including a circumferential surface (3) formed on the external surface of the stationary member (1), said surface being elastically deformable by the forces induced by the passage of the rolling bodies when the rotary member rotates, said surface having a flange (6) including means for attaching (7.) the bearing to a stationary structure and at least one instrumented area (4) whereon at least one gauge for measuring said deformations is attached, said instrumented area being circumferentially surrounded on each side respectively by a non-instrumented area (5), the rigidity of the instrumented area (4) being strictly greater' than the rigidity of the non-instrumented areas (5), said bearing being **characterised in that** it includes structural means for rigidification of the instrumented area (4) and structural means for relaxing non-instrumented areas (5), the structural rigidification means including two axial walls (8) that extend from the flange (6) while being secured to the external surface (3), each wall (8) separating the instrumented area (4) from a non-instrumented area (5) so as to angularly delimit said instrumented area between said axial walls, with the angular dimension of the instrumented area (4) being strictly smaller than the angular dimension of the non-instrumented areas (5).

2. Roller bearing according to claim 1, **characterised in that** the instrumented area (4) includes a flat portion whereon the gauge is attached.

3. Roller bearing according to claim 1 or 2, **characterised in that** the instrumented area (4) extends from the flange (6) to an opposite edge of the external surface (3).

4. Roller bearing according to claim 3, **characterised in that** the gauge is attached to the instrumented area (4) in the vicinity of the flange (6).

5. Roller bearing according to any of claims 1 to 4, **characterised in that** an attachment means (7) is formed between the two axial walls (8), in the angular portion delimiting the instrumented area (4).

6. Roller bearing according to any of claims 1 to 5, **characterised in that** the axial walls (8) extend over the entire axial dimension of the external surface (3).

7. Roller bearing according to any of claims 1 to 6, **characterised in that** a hole (9) is formed in the junction between the instrumented area (4) and the flange (6), with the gauge being at least partially attached in said hole.

8. Roller bearing according to any of claims 1 to 7, **characterised in that** the means for relaxing a non-instrumented area (5) include a hole (10) in the junction between said area and the flange (6) so as to detach, at least locally over an angular segment, the flange (6) from the non-instrumented area (5).

9. Roller bearing according to claim 8, **characterised in that** the hole (10) extends over the entire height of the flange (6) so as to form a discontinuity in said flange.

10. Roller bearing according to any of claims 1 to 9, **characterised in that** the structural rigidification means include a boss (12) produced on the instrumented area (4), with the measuring gauge being attached on said boss.

11. Roller bearing according to claim 10, **characterised in that** the boss (12) has a flat portion for attachment of the gauges, said flat portion being produced so that the diameter of its central portion (13) is substantially equal to that of the external surface (3) of the stationary member (1), with the lateral edges (14) of said flat portion protecting radially with respect to said surface.

## Patentansprüche

1. Wälzlager, umfassend ein festes Organ (1), ein drehendes Organ und mindestens eine Reihe von rollenden Körpern, die zwischen den Organen angeordnet sind, um ihre relative Drehung zu ermöglichen, wobei das feste Organ eine Umfangsfläche (3) umfasst, die auf der äußeren Fläche des festen Organs (1) gebildet ist, wobei die Fläche durch die Kräfte, induziert durch den Durchgang der rollenden Körper bei der Drehung des drehenden Organs, elastisch verformbar ist, wobei die Fläche einen Flansch (6), umfassend Mittel zur Befestigung (7) des Lagers an eine feste Struktur und mindestens eine beeinflusste Zone (4) aufweist, auf der mindestens eine Vorrichtung zur Messung der Verformungen angebracht ist, wobei die beeinflusse Zone auf dem Umfang auf beiden Seiten von jeweils einer nicht beeinflussten Zone (5) umgeben ist, wobei die Steifigkeit der beeinflussten Zone (4) streng höher als die Steifigkeit der nicht beeinflussten Zonen (5) ist, wobei das Lager **dadurch gekennzeichnet ist, dass** es strukturelle Mittel zur Versteifung der beeinflussten Zone (4) und strukturelle Mittel zur Weichmachung der nicht beeinflussten Zonen (5) umfasst, wobei die strukturellen Mittel zur Versteifung zwei axiale Wände (8) umfassen, die sich vom Flansch (6) erstrecken und fest mit der äußeren Fläche (3) verbunden sind, wobei jede Wand (8) die beeinflusste Zone (4) von einer nicht beeinflussten Zone (5) trennt, so dass sie winklig die beeinflusste Zone zwischen den seitlichen Wänden begrenzt, wobei die winklige Abmessung der beeinflussten Zone (4) streng geringer als die winklige Abmessung der nicht beeinflussten Zonen (5) ist.

2. Wälzlager nach Anspruch 1, **dadurch gekennzeichnet, dass** die beeinflusste Zone (4) eine flache Stelle umfasst, auf der die Messvorrichtung angeordnet ist.

3. Wälzlager nach Anspruch 1 oder 2, **dadurch gekennzeichnet, dass** sich die beeinflusste Zone (4) vom Flansch (6) bis zu einem Rand erstreckt, der der äußern Fläche (3) gegenüberliegt.

4. Wälzlager nach Anspruch 3, **dadurch gekennzeichnet, dass** die Messvorrichtung auf der beeinflussten Zone (4) in der Nähe des Flansches (6) angeordnet ist.

5. Wälzlager nach einem der Ansprüche 1 bis 4, **dadurch gekennzeichnet, dass** ein Befestigungsmittel (7) zwischen den zwei axialen Wänden (8) im winkligen Abschnitt, begrenzend die beeinflusste Zone (4), gebildet ist.

6. Wälzlager nach einem der Ansprüche 1 bis 5, **dadurch gekennzeichnet, dass** sich die axialen Wände (8) auf der gesamten axialen Abmessung der äußeren Fläche (3) erstrecken.

7. Wälzlager nach einem der Ansprüche 1 bis 6, **dadurch gekennzeichnet, dass** eine Öffnung (9) in der Verbindung zwischen der beeinflussten Zone (4) und dem Flansch (6) gebildet ist, wobei die Messvorrichtung mindestens teilweise in der Öffnung angebracht ist.

8. Wälzlager nach einem der Ansprüche 1 bis 7, **dadurch gekennzeichnet, dass** die Mittel zur Weichmachung einer nicht beeinflussten Zone (5) eine Öffnung (10) in der Verbindung zwischen der Zone und dem Flansch (6) umfassen, um mindestens lokal auf einem winkligen Abschnitt den Flansch (6) von der nicht beeinflussten Zone (5) zu lösen.

9. Wälzlager nach Anspruch 8, **dadurch gekennzeichnet, dass** sich die Öffnung (10) über die gesamte Höhe des Flansches (6) erstreckt, um eine Diskontinuität in dem Flansch zu bilden.

10. Wälzlager nach einem der Ansprüche 1 bis 9, **dadurch gekennzeichnet, dass** die strukturellen Mittel zur Versteifung einen Vorsprung (12) umfassen, der in einer beeinflussten Zone (4) durchgeführt ist, wobei die Messvorrichtung auf dem Vorsprung angebracht ist.

11. Wälzlager nach Anspruch 10, **dadurch gekennzeichnet, dass** der Vorsprung (12) eine flache Stelle zur Anordnung der Messvorrichtungen aufweist, wobei die flache Stelle so durchgeführt ist, dass der Durchmesser ihres zentralen Teils (13) im Wesentlichen gleich demjenigen der äußeren Fläche (3) des festen Organs (1) ist, wobei die seitlichen Ränder (14) der flachen Stelle radial bezüglich der Fläche hervorspringen.
